Europäisches Patentamt

European Patent Office

Office européen des brevets

(11) Publication number: 0 464 850 A2

# EUROPEAN PATENT APPLICATION

(21) Application number: 91111246.4

(22) Date of filing: 05.07.91

(51) Int. Cl.5: C09K 3/14

(30) Priority: 06.07.90 US 549530

(43) Date of publication of application:
08.01.92 Bulletin 92/02

(84) Designated Contracting States:
BE DE FR GB IT NL

(71) Applicant: NORTON COMPANY
1 New Bond Street
Worcester, MA 01615-0008(US)

(72) Inventor: McCutcheon, Willeam F.
784 Grooms Road
Rexford, New York 12148(US)
Inventor: Kelly, Robert G.
7 Wren Lane
Latham, N.Y. 12110(US)
Inventor: Kalita, Richard W.
288 Ruhle Road
Ballston, N.Y. 12019(US)
Inventor: Putaski, Walter T.
30 Knollwood Drive
Saratoga Springs, N.Y. 12866(US)
Inventor: Allison, Judith S.
49 Oakwood Blvd.
Clifton Park, N.Y. 12065(US)
Inventor: Loughlin, Bernard T.
R.D. No. 2, Box 157
Averill Park, N.Y. 12018(US)

(74) Representative: Diehl, Hermann Dr.
Diehl & Glaeser, Hiltl & Partner
Flüggenstrasse 13
W-8000 München 19(DE)

(54) Coated abrasives and their use.

(57) A coated abrasive product comprising fine grit particles of a seeded sol gel, has especially good grinding performance, especially when treated with a layer comprising a grinding adjuvant.

EP 0 464 850 A2

The present invention relates to coated abrasives and their use. Abrasive materials comprising a flexible substrate or backing material and an abrasive in the form of grains adhered to the backing material by means of a maker coat are referred to as coated abrasives. Such abrasive materials commonly have a size coat applied over the adhered abrasive grains to anchor them more firmly to the backing.

More specifically the present invention relates to abrasive materials in which seeded sol gel alumina provides the abrasive grains. Such seeded sol gel aluminous abrasive grains are described in U.S. Patent No. 4,623,364 (Cottringer et al.). These grains generally comprise sub-micron sized crystals of alpha alumina with a hardness of at least 16 Gpa and more usually, at least 18 Gpa. They have a unique grinding ability and have been used in the commercial production of coated abrasives for abrading metals with particle sizes of from about 120 grit and coarser.

A somewhat related product is described in U.S. Patent No. 4,881,951 (Wood et al.), which discloses an abrasive material comprising a flexible substrate and aluminous abrasive grains which comprise up to 30% of yttria, a reaction product of alumina with up to 0.5% of a rare earth metal oxide and the balance being alpha alumina. The grain can be made by a seeded sol gel process as described in Cottringer et al. The grains are adhered to the backing using a maker coat and a size coat which contains a grinding aid such as KBF4. In the examples, (103 in all), the grit size of the abrasive was from 36 to 50.

In general when abrading metal, that is when removing quantities of metal rather than merely polishing to achieve a better finish, the quantity of metal removed is related to the grit size of the abrasive being used. Thus a coarse grit is usually used to take down the surface to the approximate desired level and then the rough surface will be finished in one or more stages depending on the quality of finish desired, using products with decreasing grit sizes. Usually, however, it is found that the finer the grit, the less metal is removed by a given amount of grinding. This is in part because the finer grits conventionally used quickly become worn and cease to cut. Thus the later stages tend to be somewhat protracted. In addition, the worn grits bearing against the workpiece generate heat and this causes burning of the surface.

In abrading metals the usefulness of an abrasive product, such as a belt or a disc, is measured by the amount of metal that can be removed before the product has to be replaced. It is therefore very important that the abrasive potential of the product is used to its fullest capacity. Often, however, the product has to be discarded before the abrasive is fully exhausted because it has ceased to cut as described above and this leads to inefficient operation.

It has now been found possible to make significant and surprising improvements in the grinding performance of seeded sol gel alumina coated abrasives that enable such abrasives to cut faster and cooler.

In addition, it has been found that certain seeded sol gel abrasives have a suitability for high efficiency operations that far exceeds the expectations based on the performance of the closest related compounds.

This is achieved by the coated abrasive product according to independent claims 1 and 5 and the use of independent claim 17. Further advantageous features of the invention are evident from the dependent claims, the description and the examples. The claims are intended to be understood as a first non-limiting approach of defining the invention in general terms.

The present invention provides a coated abrasive material comprising a flexible substrate with a seeded sol gel alpha alumina in the form of abrasive particles having a particle size finer than 180 grit adhered to the substrate by a maker coat, a size coat, and applied over the size coat, a further coat comprising a grinding adjuvant.

The flexible substrate can be any one of those conventionally used for the production of coated abrasives. These include for example woven or non-woven fabrics, heavy paper stock, open mesh cloth and the like. For many purposes a heavy duty cloth fabric is preferred, usually one made from cotton or a synthetic fiber such as a nylon, a polyolefin, a polyester or mixtures thereof. While woven fabrics are often used it is sometimes advantageous to use a stitchbonded fabric. The preferred fabric may be woven or stitchbonded cotton or polyester backing material though others may be preferred in different circumstances.

The abrasive used is a sol gel alumina made by a seeding process, such as one in which a finely divided sub-micron sized nucleating agent is added to aluminum oxide hydrate, (boehmite), and the sol is gelled, dried and sintered to produce micro-crystalline alpha alumina with a very high density, crystal sizes of less than one micron and a hardness of at least 16 and more usually more than 18 Gpa. The nucleating agent should have a close structural similarity to alpha alumina in accordance with known nucleation principles and is most conveniently alpha alumina itself. Suitable processes for producing seeded sol gel alpha alumina abrasives are described in, for example, U.S. Patents Nos. 4,623,364 and 4,797,139.

The seeded sol gel abrasive can be used alone or in admixture with another abrasive such as a fused alumina, an unseeded sol gel alumina, a co-fused alumina zirconia or silicon carbide. Such additional abrasives may be mixed with the seeded sol gel alumina in the same layer or may be in a separate substrate, layer of a multiple layer coated abrasive product. In general such abrasives will form a minor proportion, that is 50% or less, of the total abrasive used though it is possible to use more to tailor the product to a specific end use. The particle sizes should conform to those of the seeded sol gel particles or be finer so as to obtain the best advantages of the invention.

The standard for coated abrasive grinding is usually taken as fused alumina. The value of other abrasives is measured to some extent at least, by the improvement, if any, they show over this standard. For example fused alumina/zirconia has been established as a premium grit on this basis. It is found however that the improvement in grinding efficiency of a fused alumina/zirconia over that of the basic fused alumina decreases with particle size such that, at grit sizes finer than about 100, there is little if any improvement, and certainly not enough to justify the premium price that such grits command. This is not true however of seeded sol gel alumina particles which, while showing a slight decline in degree, maintain a very significant improvement over fused alumina particles of the same grit size. The result is that, quite unexpectedly, seeded sol gel aluminous particles can be used in relatively fine grit sizes to abrade low carbon steels, nickel alloys and the like. The grit size of the aluminous abrasive where this advantage is particularly apparent is from about 180 and finer, especially in the absence of an adjuvant layer. In this aspect of the present invention the preferred grit size is of from about 240 to about 400.

The abrasive can be present in an open or a fully closed coat. A fully closed coat is one in which enough abrasive is present to cover the surface completely. More open coats are expressed in terms of the percentage of a fully closed coat that they represent. There can of course be multiple layers of abrasive present, with the nature of the particles differing from layer to layer if desired. This is not, however, always advantageous in the applications considered herein.

The grinding adjuvant referred to above is understood to be a compound that, when the coated abrasive is in use, makes the surface easier to abrade. It is believed that, when in contact with a surface being ground by an abrasive under normal grinding conditions, the adjuvant either reacts directly with, or breaks down to produce a chemical that reacts with, the metal surface. The adjuvant is not itself an abrasive; it merely facilitates the work done by the abrasive particles coated on the substrate.

While the function of the adjuvant is not fully understood it is observed to make the grinding process more efficient and to aid in keeping the temperature down. This is an important feature because if the temperature rises during grinding as a result of the grains becoming dulled, burning of the workpiece surface can occur. It appears however that the seeded sol gel abrasive is so effective in part because it does not dull after grinding for a period but fractures to expose a new grinding surface. This means that the frictional forces that cause heat build-up are minimized, so burning is avoided. In some circumstances therefore, especially when the grit sizes are in the very fine range, such as from about 240 and finer, a significant advantage is obtained and the adjuvant may be omitted altogether, though its presence confers further advantages.

The nature of the adjuvant is not critical provided it does not present unacceptable handling problems or release by-products that are environmentally undesirable or represent a toxicity problem to the users. Some known adjuvants that may be used include potassium fluoroborate, potassium titanium fluoride, cryolite, sulfur and mixtures thereof. Sometimes the adjuvant can be a polymer that releases halogen at high temperatures (such as would be encountered in a grinding environment), either as the element or in the form of a corrosive halogen acid. Such polymers might include for example PVC, PTFE and PVDC. The preferred halogen is fluorine since chlorine tends to induce stress corrosion cracking especially with stainless steel. Where a polymer is the adjuvant, it can also be the carrier polymer so that there may be no need to add a further component to the adjuvant layer. The preferred adjuvant however is potassium fluoroborate.

It further appears that an adjuvant layer has a surprisingly high level of effectiveness when used on a seeded sol gel product as described in the present invention. Indeed, as will be seen from the data produced in the following Examples, the initial effectiveness is far greater than that observed with very closely related abrasive grains, and certainly far more than could have been predicted on the basis of the experience of the prior art. In addition, the life of the product is extended far beyond that of the same product without the grinding adjuvant. While not wishing to be bound by theory, it is surmised that this may be because, as indicated earlier, the abrasive stays sharp and thus is able to take advantage of the action of the adjuvant for far longer than is conventional in the art.

The adjuvant layer is applied over the size layer in a carrier that can be cured, dried or hardened, to a coherent layer. This layer is usually enough to place a generally thinner covering over the grits themselves and to form a relatively thicker layer between the grits. It is also possible to incorporate adjuvant into the size coat in addition to the adjuvant layer. However, the amount that can be incorporated in a size layer is

3

somewhat limited. This is because the primary function of the size coat is to hold the grits and the inclusion of more, about 55% (wet weight), of the adjuvant would begin to interfere with this function. Since for the purposes of this invention it is usually desirable to have as much of the adjuvant as possible available to interact with the surface, the adjuvant is applied in a separate layer on top of a conventional size coat. Such a layer can contain up to about 85% and more, usually from about 55% to about 80% (wet weight basis), of the adjuvant.

The medium in which the adjuvant is applied may be the same as or different from that used for the maker and/or size coat. It should not however be a compound that interferes with the release of the active elements of the adjuvant during grinding.

Carrier media for all the layers are chosen to have a viscosity at application temperatures that allows them to be readily applied, but to be readily hardened by the action of heat, radiation, oxygen or other cross-linking mechanism to provide a coherent, somewhat flexible, tough coating.

The media chosen for the layers may be the same or different. It is sometimes found desirable however, when dealing with heavy duty grinding applications, to provide that the outer layers have a higher flexibility than the lower. For more flexible products however the reverse order of flexibility may be appropriate.

The maker, size and adjuvant layers may each comprise a phenolic resin, or other thermosetting resin or a crosslinkable thermoplastic polymer, such as one that can be cured by UV or electron beam radiation, or other suitable agency, in a controlled manner. Such coats may comprise other components known in the art for conveying other specific properties to the final product.

The form of the abrasive product can be a belt, a disc, a sheet or a pad or any other form known in the art for presenting an abrading surface to a workpiece.

The invention is now further described with reference to the following Examples.

## EXAMPLE 1

This Example describes the production and comparative testing of a coated abrasive product of the invention.

The backing used was a heavy weight woven polyester sateen with a cloth finish as described in US Patents 4,035,961 and 4,140,829. The maker coat comprised a 70/30 wt. % blend of two resol phenolic resins, V. 2535 (Occidental Pet. Co.) and BM 42 (Bendix Corp.) (43.6%); calcium carbonate, (54.5%); an organosilane, (0.25%); with the balance added water. The applied weight was 19 lbs/rm * .

The abrasive used was in a split deposited layer with 16.2 lbs/rm of a gravity fed regular fused alumina below overlain with 24.2 lbs/rm of a U.P. coat of 50 grit seeded sol-gel alumina produced by the process described in US Patent 4,623,364.

The size employed had a similar formulation to the maker coat except for the substitution of cryolite for calcium carbonate and the use of only 39.7% by weight of the resol and 49.1% of the cryolite. A size coat weight of 16 lbs/rm. was used.

On top of the size coat there was applied a formulation containing 63% by weight of potassium fluoroborate as a grinding adjuvant. This formulation was made up in an aqueous formulation that also contained 13.1% of a resol resin and 7.2% of a melamine formaldehyde resin.

Three comparative formulations were also made. The first was identical to the above except that the layer containing the grinding adjuvant was omitted (Comp. 1). The second, (Comp. 2), was identical to Comp. 1, except that the abrasive used was a fused alumina/zirconia grit, i.e. the premium NorZon (RTM) grit. Comp. 3 was identical to Comp. 2 with the addition of the grinding adjuvant coating used in the product according to the invention.

The test method used was that identified as 102 DSS which is designed to test the dulling/life performance of a coated abrasive belt is a conventional grinding configuration.

The equipment comprises a carriage assembly mounted on frictionless bearings aligned so it can move freely in a horizontal direction when the force of the attached mechanical weights is applied. Mounted to this carriage is a motor-driven vertically mounted spindle supporting a 7" ** diameter, urethane covered, 55 Durometer Shore A backup, serrated wheel with 3/8" lands and grooves, with a take up unit, configured to take a 2 1/2" x 60" coated abrasive belt mounted horizontally parallel to the floor.

* 1 lb/rm  = 0.453  kg/rm

** 1″  = 2.54cm

4

In this configuration, a 1/2" x 3" x 9 3/4" long test bar is abraded along the 1/2" face in a conventional back and forth grinding method for a controlled period of time. The test bar is allowed to cool, the amount of metal removed during the cycle is recorded, and the cycle is repeated.

The metal test bar is mounted to an oscillating fixture which supports the test bar so that the 1/2" face is presented to the abrasive belt. The fixture oscillates at a rate of 7'/min *** . The belt speed is 3000 SFPM (Surface Feet Per Minute).

In this test procedure, the grind time is two minutes and a variety of alloy steels was tested and a 15 lb. force was applied. The metal test bar is attached to the oscillating fixture, the abrasive belt is mounted on the horizontal carriage and the test is begun. The mechanical weights bring the carriage forward so that the abrasive belt contacts the 1/2" face of the test bar which is moved back and forth for the two minute test period, after which grinding is discontinued and the bar is weighed. The cycle is repeated until a cut per cycle rate of 10 gm/min is reached at which point the belt is deemed worn out. Thus the greater the total cut on this test rig, the better the performance of the belt and the grit used.

In the following Table 1, which reports the results of applying the above procedure to stainless steel the test results are reported as percentages, with the performance of the Comp. 3 belt taken as 100%. As will readily be seen the belts according to the invention out-performed not only the Comp. 1 belts but also those of the belts made with the premium Norzon grits, both with and without the grinding adjuvant. The surprising aspect of these results is that, whereas the untreated seeded sol gel alumina abrasive is inferior to NorZon, the treated products are at least comparable, showing that the degree of improvement obtained with the seeded sol gel alumina is very much better than expected from the NorZon data.

TABLE 1

| COMP. 1 | 77 % |
|---------|------|
| COMP. 2 | 100 % |
| COMP. 3 | 228 % |
| EX. 1 | 232 % |

**EXAMPLE 2**

In this Example a belt according to the invention was compared with a "Comp. 1" belt in grinding welds of a variety of alloys in a manufacturing operation. The number of welds ground before the belt was exhausted was measured for both products. In each case the grit size was 50. The results are set forth in Table 2.

**TABLE 2**

| ALLOY | NO. OF WELDS GROUND | |
|-------|------|------|
| | COMP. 1 | EXAMPLE 1 |
| Inconel 718 | 21 | 42 |
| 17.4 PH Stainless | 10 | 14 |
| 347C | 0.5 | 1.5 |
| Greek Ascoloy | 11 | 22 |
| Vasco T250 | 5 | 7 |
| Rene 41 | 58 | 92 |

It is clear from the above that the product with the grinding adjuvant is significantly better than the standard seeded sol-gel alumina product.

**EXAMPLE 3**

***1'/min = 0.305 meters/min.

5

This example shows the surprising effectiveness of fine grit seeded sol gel products compared with regular fused alumina grits of the same size. The test procedure involved rotating a 1026 carbon steel ring, (6" interior diameter, 2" width), axially at 10 rpm and forcing it, with a pressure of 12-16 pounds **** , against a 60" x 2 1/2" abrasive belt operating at 2500 rpm. The amount of metal abraded with time was measured and compared against a standard fused alumina abrasive belt operating under the same conditions. The results are shown in Table 3.

## TABLE 3

|  | 2 min | 4 min | 6 min | 10 min | Total | % |
|---|---|---|---|---|---|---|
| 280 fused | 21 g | 8.7 g | 1.9 g | --- | 31.6 g | 100 |
| 280 s.sol-gel | 28.1 g | 12.8 g | 8.6 g | --- | 49.5 g | 157 |
| 240 fused | 25.5 g | 9.8 g | 4.2 g | --- | 39.5 g | 100 |
| 240 s.sol-gel | 40.6 g | 28.4 g | 12.0 g | 2.4 g | 83.1 g | 210 |

Thus the fine grit seeded sol-gel alumina products significantly outperformed the standard fused alumina products in terms of the amount of metal cut before the belt is worn out.

**EXAMPLE 4**

This Example shows the beneficial effects from the use of a supersize when fine grit seeded sol gel alumina abrasive products are used.

The same procedure as is described in Example 3 is used, except that the metals abraded were 1026 Steel and 304 Stainless Steel. The grit used were 60/40 wt. % blend of seeded sol gel alumina with fused alumina, each of 240 grit.

Three belts were prepared in identical fashion, except that one had no adjuvant layer, a second had an adjuvant layer of essentially the same composition as the one described in Example 1. The application level was 4.5 lbs./Rm. The third belt was provided with a size coat of the same formulation as the adjuvant coat described above. The application level was 8 lbs./Rm. The results obtained are set forth in Table 4.

## TABLE 4

| PRODUCT | STAINLESS % OF 1. | 1026 STEEL % OF 1. |
|---|---|---|
| 1. No Size | 100 | 100 |
| 2. KBF4 in Size Coat | 160 | 109 |
| 3. KBF4 in Adjuvant Layer | 205 | 195 |

The results demonstrate that even with fine grade 60/40 blends of seeded sol gel alumina with fused alumina, significant improvements are obtained from the use of a grinding adjuvant.

## Claims

1. A coated abrasive product comprising a flexible substrate or backing material and, adhered thereto by means of a maker coat, and optionally a size coat, a seeded sol-gel alpha alumina abrasive with a grit size of 180 or finer.

**** 1 pound = 0.453 kg

2. A coated abrasive product according to claim 1 in which the sol-gel abrasive particles have a grit size of 240 or finer.

3. A coated abrasive product according to claim 1 or 2, in which the seeded sol-gel alumina abrasive grains comprise crystals with a crystal size of one $\mu$m or less.

4. A coated abrasive product according to claim 3, in which the alpha alumina has a hardness of at least 18 Gpa and a density of at least 95% of the theoretical density.

5. A coated abrasive product especially according to one of the preceding claims, comprising a flexible substrate or backing, with a seeded sol gel alpha alumina in the form of abrasive particles adhered to the substrate or backing by a maker coat, a size coat and a further separate coat comprising a grinding adjuvant.

6. A coated abrasive product according to claim 5 wherein the abrasive particles have a particle size of less than 180 grit.

7. A coated abrasive product according to claim 5 or 6, wherein the further separate coat is applied over the size coat.

8. A coated abrasive product according to one of the preceding claims in which the abrasive particles have a grit size of 240 or finer.

9. A coated abrasive product according to one of the preceding claims, in which the size coat also contains a grinding adjuvant.

10. A coated abrasive product according to one of claims 5 to 9, in which the separate coat comprising a grinding adjuvant comprises from about 55 to about 85 wt.% of the adjuvant.

11. A coated abrasive product according to one of cclaims 5 to 10, in which the grinding adjuvant is potassium fluorobrate.

12. A coated abrasive product according to one of the preceding claims, in which the seeded sol-gel alumina abrasive grains comprises crystals of alpha alumina with a crystalline size of one $\mu$m or less.

13. A coated abrasive product according to one of claims 5 to 12, in which the alpha alumina has a hardness of at least 18 Gpa and a density that is at least 95% of the theoretical density figure.

14. A coated abrasive product according to one of the preceding claims, in which each of the various coats further comprises a phenolic resin.

15. A coated abrasive product according to one of the preceding claims in which the seeded sol-gel alumina abrasive grains have a crystal size of one $\mu$m or less.

16. A coated abrasive product according to one of the preceding claims in which the abrasive forms from about a 50 to about an 85% closed coating.

17. A method of abrading a metal workpiece which comprises using an abrasive product according to one of the preceding claims.